# EUROPEAN PATENT SPECIFICATION

(11) **EP 0 757 467 B1**
(45) Date of publication and mention of the grant of the patent: **12.01.2005**
(21) Application number: 96850136.1
(22) Date of filing: 10.07.1996
(51) Int. Cl.: H04Q 3/00, H04M 3/493

(54) **Procedure for transmission of data between telephone call and telecommunication service equipment**
Verfahren zur Transmission von Daten zwischen Fernsprechanruf- und Telekommunikationsdienstgerät
Procédé pour la transmission de données entre équipement d'appel téléphonique et de service de télécommunication

(30) Priority: 04.08.1995 SE 9502776
(43) Date of publication of application: 05.02.1997
(73) Proprietor: TELIA AB, 123 86 Farsta (SE)
(72) Inventor: Karlsson, Leif, 422 57 Hisingsbacka (SE)
(74) Representative: Akerman, Marten Lennart

(56) References cited:
- EP-A- 0 560 111
- US-A- 5 283 731

## Description

### TECHNICAL FIELD

The present invention relates to a procedure for transmission of data between telephone call and telecommunication service equipments in telecommunication systems. The invention allows a call unique way of addressing at transmission in real time of data between in the system included service nodes and different equipments which are concerned by a call. The invention makes possible for telecommunication service equipments to collect data which is related to a certain call and which has been stored in a database by an answering equipment at utilization of the way of addressing.

### PRIOR ART

It is in the interest of a telecommunication operator to be able to offer the customers advanced network services where one can use the service user's dialled information for various in the system included equipments. Examples of such equipments can be customer administrative databases, external service nodes etc. Today's technology for intelligent network services requires that the answering equipment which communicates with the customer is located locally in the switching node, which from capacity and cost reasons is less desirable. It is suitable to place this equipment in another place in the network, but then problems will arise with transmitting the data between the answering equipment and the service logic in the service node. For such communication data transmission can be made via an external database. Then, however, the problem will arise to safely relate the entered data in the database to a certain call in the service node. An additional problem is to make possible to transmit call related data from the service node to the service supplier's answering equipment when existing interface do not allow any such data transmission. The present invention tries to solve these problems of the known technology.

The known technology only can transmit a small number of digits from a telecommunication service to an answering place. It is not possible to in real time transmit call related data between just any nodes and equipments during an existing call.

The invention solves the problem by the service node coordinating a call with entered data by arrangning a call unique coordination code and transmitting this to the answering equipment in question. The answering equipment stores the data while using the code in a way that data related to a certain call later can be collected by a suitable equipment.

### CONCLUSION OF THE INVENTION

Consequently the present invention provides a procedure for transmission of data between telephone call and telecommunication service equipment, at which a call from a subscriber is connected by a switching node to a service node for routing to suitable answering equipment. According to the invention the service node coordinates the call with a call unique coordination code and transmits this to the answering equipment. The answering equipment stores data which is transmitted in the call during utilization of the coordination code, so that data related to a certain call can be collected by the service node.

Preferably the answering equipment stores the data in a database. The coordination code can be transmitted to at least one external node which then can collect data related to a certain call, provided that the external node has data access to the database.

Preferably the coordination code is created as one for the service node unique consecutive number.

The invention is presented in detail in enclosed patent claims.

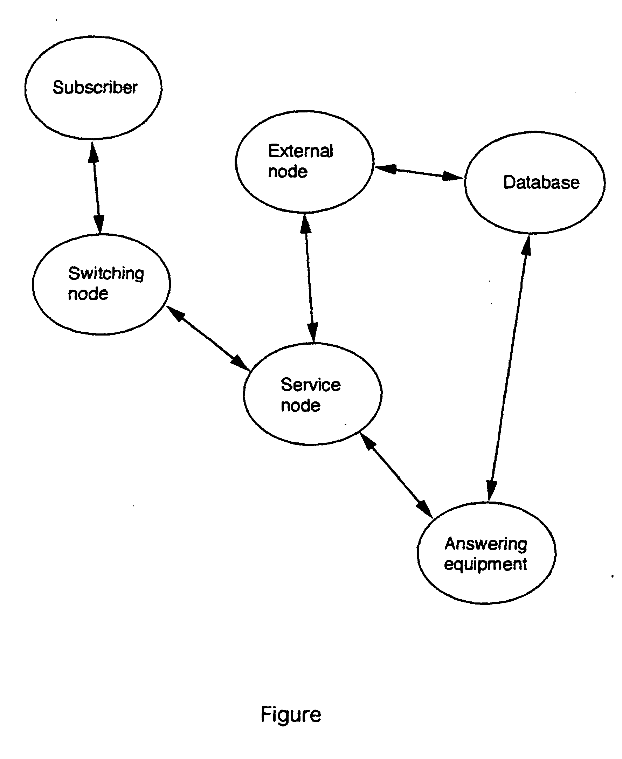

### SHORT DESCRIPTION OF THE DRAWING

The invention will now be described in detail with reference to enclosed drawing, of which the only figure is a schematic diagram over the included components to perform a procedure according to the present invention.

### SHORT DESCRIPTION OF PREFERRED EMBODIMENTS

It is today a very common practice that subscribers establish connection with an answering equipment for exchange of information, ordering of services etc. The service equipment must store transferred data and must also relate the data to the call so that it when necessary can be collected and used in a correct way. The present invention intends to solve this problem.

In the figure is shown schematically a subscriber who, via a switching node, is connected to a service node. The service node routes the call to a suitable answering equipment which in its turn can store transferred data in an internal or external database. External nodes can also be connected to the service node and the database. The arrows indicate that data can be transmitted in different directions.

In today's technology the answering equipment is placed locally in the switching node, which for capacity and cost reasons is not desirable. According to present invention the service node coordinates a call with a call unique coordination code. The coordination code is suitably one for the service node unique sequential number which is stepped for each new call. The service node transmits the coordination code to the answering equipment, preferably as a part of the call number of the answering equipment.

At storing of data the answering equipment utilizes the coordination code as an address position in the database. The service node can after that use the same addressing at reading of data.

The service node also can transmit the coordination code to other external nodes which then can collect data related to a certain call from the database. This implies that the external nodes have data access to the database. The invention makes it possible to transmit name, address etc to the answering equipment, if the database or the answering equipment has data interface towards the telecommunication operator's administrative system. The invention also makes it possible to transfer user related data such as personal code number, PIN-code, account number etc, which the user dials into the service node and/or the answering equipment at the call. With the invention it will for instance be possible to transfer information whether the customer has economic coverage for one via the telecommunication service ordered article or service. It becomes possible for the telecommunication operator to offer services the functionality of which exist in the telecommunication network and to the customer only transfers basic data for delivery, charging etc. It becomes possible to order and pay for films, video information, texts. music and multimedia in a simple way via an ATM-network.
An expert in the field realizes how the invention shall be implemented in detail by use of in itself known hardware and software. The invention is only restricted by following patent claims.

## Claims

1. Procedure for transmission of data between telephone call and telecommunication service equipment, at which a call from a subscriber is connected by a switching node to a service node for routing said call to a suitable answering equipment,
**characterized in that** the service node coordinates the call with a call unique coordination code and transmits this coordination code to the answering equipment, that the answering equipment stores data which is transferred in the call during utilization of the coordination code, so that data related to a certain call can be collected by the service node.

2. Procedure according to patent claim 1,
**characterized in that** the answering equipment stores the data in an internal or external database.

3. Procedure according to patent claim 1 or 2,
**characterized in that** the coordination code is transmitted to at least one external node which can collect data related to a certain call if the external node has data access to the database.

4. Procedure according to any of the previous patent claims, **characterized in that** the answering equipment is an audio response unit with which the customer interactively can exchange data.

5. Procedure according to any of the previous patent claims, **characterized in that** the in the call transferred data includes name, address, personal code number, PIN-code or account number.

6. Procedure according to any of the previous patent claims, **characterized in that** the coordination code is created as one for the service node unique consecutive number.

7. Procedure according to any of the previous patent claims, **characterized in that** the coordination code is transferred as a part of the call number of the answering equipment.

## Patentansprüche

1. Verfahren zum Übertragen von Daten zwischen Fernsprechanruf- und Telekommunikationsdienstgerät, wobei ein Anruf von einem Teilnehmer durch einen Schaltknoten mit einem Dienstknoten verbunden wird, um den Anruf auf ein geeignetes Antwortgerät zu routen, **dadurch gekennzeichnet, daß** der Dienstknoten den Anruf mit einem Anrufeinheitskoordinationscode koordiniert und diesen Koordinationscode auf das Antwortgerät überträgt, daß das Antwortgerät Daten speichert, die bei dem Anruf während der Verbindung des Koordinationscodes übertragen worden sind, so daß Daten bezüglich eines gewissen Anrufes durch den Dienstknoten gesammelt werden können.

2. Verfahren nach Patentanspruch 1, **dadurch gekennzeichnet, daß** das Antwortgerät die Daten in einer internen oder externen Datenbank speichert.

3. Verfahren nach Patentanspruch 1 oder 2, **dadurch gekennzeichnet, daß** der Koordinationscode auf wenigstens einen externen Knoten übertragen wird, der Daten bezüglich eines gewissen Anrufes sammeln kann, wenn der externe Knoten zu der Datenbank Datenzugriff hat.

4. Verfahren nach einem der vorstehenden Patentansprüche,
**dadurch gekennzeichnet, daß** das Antwortgerät eine Sprachausgabeeinheit ist, mit der der Kunde interaktiv Daten austauschen kann.

5. Verfahren nach einem der vorstehenden Patentansprüche,
**dadurch gekennzeichnet, daß** die bei dem Anruf übertragenen Daten Name, Adresse, persönliche Codenummer, PIN-Code oder Zugangsnummer enthalten.

6. Verfahren nach einem der vorstehenden Patentansprüche,
**dadurch gekennzeichnet, daß** der Koordinationscode als eine für den Dienstknoten einzige, fortlaufende Nummer erzeugt wird.

7. Verfahren nach einem der vorstehenden Patentansprüche,
**dadurch gekennzeichnet, daß** der Koordinationscode als ein Teil der Rufnummer des Antwortgerätes übertragen wird.

## Revendications

1. Procédé pour la transmission de données entre équipements d'appel téléphonique et de service de télécommunication, dans lequel un appel d'un abonné est connecté par un noeud de commutation à un noeud de service pour acheminement du dit appel à un équipement de réponse approprié,
**caractérisé en ce que** le noeud de service coordonne l'appel avec un code de coordination spécifique de l'appel et transmet ce code de coordination à l'équipement de réponse, et **en ce que** l'équipement de réponse stocke des données qui sont transférées dans l'appel pendant l'utilisation du code de coordination, de sorte que les données associées à un certain appel peuvent être collectées par le noeud de service.

2. Procédé selon la revendication 1, **caractérisé en ce que** l'équipement de réponse stocke les données dans une base de données interne ou externe.

3. Procédé selon la revendication 1 ou 2, **caractérisé en ce que** le code de coordination est transmis à au moins un noeud externe qui peut collecter les données associées à un certain appel si le noeud externe a un accès de données à la base de données.

4. Procédé selon une quelconque des revendications précédentes, **caractérisé en ce que** l'équipement de réponse est une unité de réponse audio avec laquelle l'abonné peut échanger des données de façon interactive.

5. Procédé selon une quelconque des revendications précédentes, **caractérisé en ce que** les données transférées dans l'appel comprennent un nom, une adresse, un numéro de code personnel, un code PIN ou un numéro de compte.

6. Procédé selon une quelconque des revendications précédentes, **caractérisé en ce que** le code de coordination est créé comme un numéro consécutif spécifique du noeud de service.

7. Procédé selon une quelconque des revendications précédentes, **caractérisé en ce que** le code de coordination est transféré comme une partie du numéro d'appel de l'équipement de réponse.
